# EUROPEAN PATENT APPLICATION

(11) **EP 2 395 060 A1**
(43) Date of publication of application: **14.12.2011**
(21) Application number: 10738453.9
(22) Date of filing: 28.01.2010
(51) Int. Cl.: C09D 201/00, B32B 27/00, B32B 27/20, C09D 5/02, C09D 5/24, C09D 7/12, H01B 1/20

(54) **CONDUCTIVE COATING COMPOSITION**

(30) Priority: 04.02.2009 JP 2009023447
(71) Applicant: Nissan Chemical Industries, Ltd., Chiyoda-ku Tokyo 101-0054 (JP)
(72) Inventor: ISAJI Tadayuki, Funabashi-shi Chiba 274-8507 (JP); MITSUI Shigeru, Funabashi-shi Chiba 274-8507 (JP)
(74) Representative: Stuart, Ian Alexander
(86) International application number: PCT/JP2010/051104
(87) International publication number: WO 2010/090119

(57) **Abstract**

A conductive coating composition which comprises an aqueous dispersion of an intrinsically conductive polymer and a thickener, the thickener being at least one compound selected from a group consisting of polysaccharides, polyethylene oxide, polyvinyl acetate, polyvinyl alcohol, polyvinylpyrrolidone, and gelatins, preferably at least one compound selected from guar gum and derivatives thereof. This conductive coating composition has a simple composition and can be produced through simple steps. The composition is applicable even to printing techniques including screen printing.

## Description

### TECHNICAL FIELD

The present invention relates to a conductive coating composition. More particularly, the invention relates to a conductive coating composition using an aqueous dispersion of an intrinsically conductive polymer.

### BACKGROUND ART

Aromatic conductive polymers such as polyaniline, polythiophene and polypyrrole are expected to be put to active use, since they have excellent stability and conductivity. However, these conductive polymers have been limited in the field of application thereof, since they are insoluble in any solvent and they are poor in formability.
In addition, for antistatic finish of transparent plastics or for formation of transparent electrodes on plastic substrates, there has recently been a demand for an intrinsically conductive polymer film which has high hardness and high transparency so as not to damage the transparency of substrates.

In recent years, it has been reported that good formability can be obtained when a conductive polymer in a particulate form is dispersed in water or an organic solvent such as aromatic solvents (see Patent Documents 1 to 5).
Dispersions of intrinsically conductive polymers obtained by doping the above-mentioned conductive polymers with dopants, in general, are used as aqueous colloidal dispersions or as dispersions in organic solvent.
These dispersions of intrinsically conductive polymers, however, are so low in viscosity that they are unsuited to formation of electrodes by use of printing techniques such as screen printing. For this reason, the conductive polymers have still been limited in the field of application thereof.

As a method for solving these problems, there has been proposed an addition of a thickener to the conductive polymer (see Patent Documents 6 and 7). However, there is still a demand for further improvements.

### PRIOR ART DOCUMENTS

### PATENT DOCUMENTS

Patent Document 1: JP-A 1995-90060
Patent Document 2: JP-A 1990-500918
Patent Document 3: JP-A 2004-532292
Patent Document 4: JP-A 2004-532298
Patent Document 5: WO 2006/087969 pamphlet
Patent Document 6: JP-A 2002-500408
Patent Document 7: JP-A 2008-300063

### DISCLOSURE OF THE INVENTION

### PROBLEMS TO BE SOLVED BY THE INVENTION

The present invention has been made in consideration of the above-mentioned circumstances. Accordingly, it is an object of the present invention to provide a conductive coating composition which is simple in composition and production steps thereof and which is applicable even to printing techniques.

### MEANS FOR SOLVING THE PROBLEM

The present inventors made earnest investigations for attaining the above object. As a result of their investigations, they found out that when a specific thickener is added to an aqueous dispersion of an intrinsically conductive polymer, a conductive coating composition can be obtained which is simple in composition and which can be applied even to printing techniques such as screen printing.

To be more specific, the present invention resides in:
1. a conductive coating composition including an aqueous dispersion of an intrinsically conductive polymer and a thickener, wherein the thickener is at least one selected from the group consisting of polysaccharides, polyethylene oxide, polyvinyl acetate, polyvinyl alcohol, polyvinylpyrrolidone, and gelatins;
2. the conductive coating composition according to paragraph 1 above, wherein the thickener is a heteropolysaccharide;
3. the conductive coating composition according to paragraph 1 above, wherein the thickener is at least one selected from among guar gum and derivatives thereof;
4. the conductive coating composition according to paragraph 3 above, wherein the thickener is hydroxypropyl guar gum or carboxylmethylhydroxypropyl guar gum;
5. the conductive coating composition according to paragraph 1 above, wherein the intrinsically conductive polymer includes at least an aniline unit;
6. the conductive coating composition according to paragraph 1 above, wherein the intrinsically conductive polymer is a doped polyaniline, a doped polythiophene, a mixture of them or a copolymer of them;
7. the conductive coating composition according to paragraph 1 above, wherein the intrinsically conductive polymer is a doped polyaniline;
8. a member including a substrate and a coating film formed on the substrate, wherein the coating film is formed from the conductive coating composition according to any of paragraphs 1 to 7 above; and
9. the member according to paragraph 8 above, wherein the substrate is plastic, rubber, glass, metal, ceramic, or paper.

### ADVANTAGEOUS EFFECTS

According to the present invention, it is possible to provide a conductive coating composition which is simple in composition and production steps thereof and which is applicable even to printing techniques such as screen printing.
This conductive coating composition can be applied to a substrate by any of various coating methods such as screen printing, a roll transfer method, a dispenser method, etc. and gives a coating film which is high in transparency. By use of the composition, therefore, it is possible to produce a member having a conductive or antistatic coating film without damaging the transparency of a transparent substrate.
The conductive coating composition of the present invention as above-mentioned is applicable to various uses such as a transparent electrode material, a transparent antistatic agent, a UV absorber, a heat absorber, an electromagnetic wave absorber, a sensor, an electrolyte for electrolytic capacitors, an electrode for secondary cells, etc.

### BEST MODES FOR CARRYING OUT THE INVENTION

Now, the present invention will be described more in detail below.
The conductive coating composition according to the present invention includes an aqueous dispersion of an intrinsically conductive polymer and a thickener, wherein the thickener is at least one selected from the group consisting of polysaccharides, polyethylene oxide, polyvinyl acetate, polyvinyl alcohol, polyvinylpyrrolidone, and gelatins.

Here, the intrinsically conductive polymer is one of those polymers which are generally called Intrinsically Conductive Polymers (ICPs) in the art, in which a polyradical cationic salt or a polyradical anionic salt is formed by doping with a dopant, and which can exhibit conductivity in themselves.

The intrinsically conductive polymer which can be used in the present invention is not specifically restricted. Examples of the intrinsically conductive polymer include those polymers obtained by doping, with a dopant, various known polymers such as polymers of aniline, pyrrole, thiophene, acetylene, and derivatives thereof. Incidentally, these polymers may be used either singly or as a mixture of two or more of them. Preferably, a polymer which contains at least an aniline unit in part thereof is used. In addition, examples of the dopant include sulfonic acid compounds such as polystyrenesulfonic acid, methanesulfonic acid, alkylbenzenesulfonic acids, camphorsulfonic acid, etc., carboxylic acid compounds such as acetic acid, etc., and hydrogen halides such as hydrochloric acid, hydrobromic acid, etc.

Examples of the above-mentioned polysaccharides include pectin, guar gum and derivatives thereof, xanthan gum, locust bean gum, carrageenan, chitin, amylose, amylopectin, agarose, hyaluronic acid, xyloglucan, and celluloses. Among these, preferred are heterosaccharides such as guar gum and derivatives thereof, xanthan gum, locust bean gum, agarose, hyaluronic acid, and xyloglucan.
Examples of the guar gum derivatives include hydroxypropyl guar gum, carboxymethylhydroxypropyl guar gum, and cation-modified guar gum. These are available as commercial products, specific examples of which include MEYPRO HPG 8111, MEYPRO HPG 8600, MEYPRO-BOND 9806, JAGUAR HP-8, JUGUAR HP-105, and JUGUAR HP-120 (all available from Sansho Co., Ltd.).

Examples of celluloses include diacetyl cellulose, triacetyl cellulose, hydroxypropyl cellulose, triacetyl cellulose, diacetyl cellulose, acetylcellulose, cellulose acetate propionate, cellulose acetate butyrate, cellulose acetate phthalate, cellulose acetate trimellitate, and cellulose nitrate.

Examples of gelatins include phthalated gelatin, succinated gelatin, trimellited gelatin, pyromellited gelatin, esterified gelatin, amidated gelatin, and formylated gelatin.

In the conductive coating composition according to the present invention, the compounding ratio of the aqueous dispersion of the intrinsically conductive polymer to the thickener is not particularly limited. Preferably, the compounding ratio of the aqueous dispersion of the intrinsically conductive polymer to the thickener, in solid component weight ratio, is in the range from 99.9:0.1 to 0.1:99.9, more preferably from 99:1 to 1:99.
Besides, taking into account the applicability to a substrate by printing technique, the viscosity at 25°C of the conductive coating composition of the present invention is preferably in the range of 0.5 to 100 Pa•s, more preferably 1 to 30 Pa•s.
The method for preparing the conductive coating composition is not specifically restricted. The aqueous dispersion of the intrinsically conductive polymer and the thickener may be appropriately blended with each other by an arbitrary technique.

Furthermore, in the present invention, a surface active agent, an acid, a base or the like may be added to the conductive coating composition in amounts of about 0.1 to 10 wt%, for the purpose of enhancing the dispersibility and shelf stability of the composition.
The surface active agent is not specifically restricted. Anionic, cationic, nonionic and the like surface active agents can be widely used, through appropriate selection from among known surface active agent.
Examples of the acid include inorganic acids such as hydrochloric acid, nitric acid, orthophosphotic acid, etc.; aliphatic oxy acids such as oxalic acid, lactic acid, tartaric acid, malic acid, citric acid, glycolic acid, hydroacrylic acid, α-oxybutyric acid, glyceric acid, tartronic acid, etc.; and phosphonic acids such as phenylphosphonic acid, 1-hydroxyethylidene-1,1-diphosphonic acid, etc.

Examples of the base include ammonia; alkali metal hydroxides; alkyl or aralkylamines such as ethylamine, diethylamine, n-propylamine, isopropylamine, diisopropylamine, dipropylamine, n-butylamine, isobutylamine, diisobutylamine, triethylamine, benzylamine, octylamine, dodecylamine, stearylamine, etc.; alkanolamines such as monoethanolamine, triethanolamine, etc.; quaternary ammonium hydroxides such as guanidine hydroxide, tetramethylammonium hydroxide, tetraethylammonium hydroxide, etc.; and organic bases such as ammonium carbonate, guanidine carbonate, etc.

The conductive coating composition according to the present invention can be applied to a substrate and dried, to form a thin film. By such a process, it is possible to obtain a member having a transparent conductive coating film or transparent antistatic coating film.
Examples of the substrate which can be used here include various ones such as plastic, rubber, glass, metal, ceramic, paper, etc.
The method for applying (for coating with) the conductive coating composition may be appropriately selected from among known techniques, examples of which include bar coating, reverse coating, gravure printing, microgravure printing, screen printing, dipping, spin coating, spraying, roll transfer, dispenser method, etc.
A heating treatment can be carried out by hot air drying. In this case, the treatment is preferably conducted in hot air at a temperature of 70 to 200°C, more preferably 90 to 150°C.
Incidentally, the conductive coating composition according to the present invention can be made to be a hardened film through addition of a binder component as described in JP-A 2007-324143.

The thickness of the coating film formed from the conductive coating composition according to the present invention cannot be unconditionally specified, since it is to be appropriately set according to the intended use of the coating film. Preferably, the thickness is about 0.05 to 10 µm, more preferably 0.1 to 5 µm.
The coating film has a surface resistance in the range of 10° to 10¹⁴ Ω/□; in other words, the coating film shows an extremely good conductivity. Incidentally, the surface resistance can be measured by a surface resistivity measuring instrument (for example, Hiresta UP (made by Mitsubishi Chemical Corp.), Loresta IP (made by Mitsubishi Chemical Corp.)).

The conductive coating film in the present invention can be imparted, for example, an antireflective function by forming an antireflective film thereon.
The antireflective film is preferably lower than the conductive coating film in refractive index; in this case, the difference in refractive index is preferably not less than 0.05, more preferably in the range of 0.1 to 0.5, and optimally in the range of 0.15 to 0.5. If the difference in refractive index is less than 0.05, the synergistic effect concerning the antireflective coating film may be unobtainable and, rather, the antireflective effect may be lowered.

The thickness of the antireflective film is not particularly limited, and is preferably 50 to 300 nm. If the thickness is less than 50 nm, the adhesion of the antireflective film to the conductive coating film serving as a substrate may be lowered. If the thickness is more than 300 nm, on the other hand, light interference may be generated and the antireflective effect may be thereby lowered. Where a plurality of antireflective films are provided in order to obtain a higher antireflective capability, the total thickness should preferably be 50 to 300 nm.

The material for forming the antireflective film is not specifically restricted. Examples of the material include: organic silicon compounds and hydrolyzates thereof; fluororesins such as fluoroolefin polymers, fluorine-containing acrylic polymers, etc.; and low-refractive-index coating compositions obtained by mixing low-refractive-index particulates such as particulates of magnesium fluoride, lithium fluoride, sodium fluoride, etc. or porous particulates with an organic or inorganic binder.
Besides, a film of an inorganic compound such as magnesium fluoride, silica, etc. may be formed as the antireflective film by such a method as vacuum evaporation, sputtering, etc.

Furthermore, as an antireflective film, the conductive coating film in the present invention can be imparted an antireflective function by providing thereon a multi-layer antireflective film including a high-refractive-index layer(s) and a low-refractive-index layer(s) which are formed alternately. In this case, preferably, the high-refractive-index layer is a layer of an oxide of at least one selected from the group consisting of titanium, tantalum, zirconium, niobium and yttrium, while the low-refractive-index layer is a layer of at least one selected from the group consisting of silica, alumina, magnesium fluoride, lithium fluoride, and sodium fluoride.
The high-refractive-index film(s) and low-refractive-index film(s) can be formed by vacuum evaporation, sputtering, ion plating or the like dry plating method.

### EXAMPLES

Now, the present invention will be described more in detail below by showing Examples thereof, but the invention is not to be limited to the following Examples. Incidentally, the methods and conditions for measurement of physical properties in the following Examples were as follows.

### [1] Tt value

Measured by use of a spectroscopic haze meter TC-H3DPK-MKII (made by Tokyo Denshoku Co., Ltd.).

### [2] Haze

Measured by use of spectroscopic haze meter TC-H3DPK-MKII (made by Tokyo Denshoku Co., Ltd.).

### [3] Surface resistance

Measured by use of Loresta IP TCP-T250 (made by Mitsubishi Chemical Corp.).

### [4] Pencil hardness

Measured by use of a pencil hardness meter (No. 553-M FILM HARDNESS TESTER BY MEANS OF PENCILS, made by Yasuda Seiki seisakusho Ltd.) and according to the technique described in JIS-K5600-5-4.

### [5] Cross-cut test

Tested by use of a cross-cut guide (CCI-1, made by Kotec Ltd.) according to the technique described in JIS-K5600, and the number of the remaining cross points was described.

### [6] Viscosity

Measured by use of a E-type viscometer (VISCOMETER TV-20, made by Toki Sangyo Co., Ltd.) in a measuring range U at a rotating speed of 0.5 rpm.

### Preparation Example 1

### Preparation of aqueous dispersion of intrinsically conductive polymer

To 2000 g of an aqueous colloidal dispersion of an intrinsically conductive polymer containing a doped polyaniline, 6903-116-000 (made by ORMECON), was added 60.0 g of N-methylpyrrolidone, to obtain an aqueous dispersion having a solid content of 1.7 wt%, a viscosity at 25°C of 51 mPa•s, and a conductivity of 380 S/cm.

### Example 1

With 98.5 g of the aqueous dispersion obtained in Preparation Example 1 was mixed 1.5 g of hydroxypropyl guar gum (JAGUAR HP-105, made by Sansho Co., Ltd.), and the resulting mixture was stirred for one hour, to obtain a conductive coating composition. The conductive coating composition thus obtained was in a favorably dispersed state and had a viscosity at 25°C of 4.8 Pa·s.
The conductive coating composition obtained above was applied to a glass plate by use of a 0.010 mm applicator, followed by drying at 100°C for 10 min, to form a conductive coating film. The conductive coating film thus obtained had a Tt value of 90%, a haze of 0.0, a surface resistance of 330 Ω/□, and a pencil hardness of not higher than HB, with the result of cross-cut test being 100.

### Example 2

With 98.5 g of the aqueous dispersion obtained in Preparation Example 1 was mixed 1.5 g of carboxymethylhydroxypropyl guar gum (MEYPRO HPG8600, made by Sansho Co., Ltd.), and the resulting mixture was stirred for one hour, to obtain a conductive coating composition. The conductive coating composition thus obtained was in a favorably dispersed state and had a viscosity of 4.8 Pa•s at 25°C.
The conductive coating composition obtained above was applied to a glass plate by use of a 0.010 mm applicator, followed by drying at 100°C for 10 min, to form a conductive coating film. The conductive coating film thus obtained had a Tt value of 92%, a haze of 0.0, a surface resistance of 580 Ω/□, and a pencil hardness of not higher than HB, with the result of cross-cut test being 100.

### Example 3

With 70.0 g of the aqueous dispersion obtained in Preparation Example 1 were mixed 1.05 g of carboxylmethylhydroxypropyl guar gum (MEYPRO HPG8600, made by Sansho Co., Ltd.) and 0.10 g of boric acid, followed by stirring for 30 min. To 17.2 g of the mixture thus obtained, was added 1.3 g of a UV-curing resin composition (O-106, made by Chukyo Yushi Co., Ltd., a solid content of 19.1 wt%), to prepare a conductive coating composition. The conductive coating composition thus obtained was in a favorably dispersed state and had a viscosity of 18.6 Pa•s at 25°C.
The conductive coating composition obtained above was applied to a glass plate by use of a 0.010 mm applicator, followed by drying at 100°C for 10 min and irradiation with UV rays (7 J/cm²), to form a conductive coating film. The conductive coating film thus obtained had a Tt value of 88%, a haze of 0.3, a surface resistance of 2500 Ω/□, and a pencil hardness of not higher than HB, with the result of cross-cut test being 100.

## Claims

1. A conductive coating composition comprising an aqueous dispersion of an intrinsically conductive polymer and a thickener,
wherein the thickener is at least one selected from the group consisting of polysaccharides, polyethylene oxide, polyvinyl acetate, polyvinyl alcohol, polyvinylpyrrolidone, and gelatins.

2. The conductive coating composition according to claim 1, wherein the thickener is a heteropolysaccharide.

3. The conductive coating composition according to claim 1, wherein the thickener is at least one selected from among guar gum and derivatives thereof.

4. The conductive coating composition according to claim 3, wherein the thickener is hydroxypropyl guar gum or carboxylmethylhydroxypropyl guar gum.

5. The conductive coating composition according to claim 1, wherein the intrinsically conductive polymer includes at least an aniline unit.

6. The conductive coating composition according to claim 1, wherein the intrinsically conductive polymer is a doped polyaniline, a doped polythiophene, a mixture of them or a copolymer of them.

7. The conductive coating composition according to claim 1, wherein the intrinsically conductive polymer is a doped polyaniline.

8. A member comprising a substrate and a coating film formed on the substrate,
wherein the coating film is formed from the conductive coating composition according to any of claims 1 to 7.

9. The member according to claim 8, wherein the substrate is plastic, rubber, glass, metal, ceramic, or paper.
